# EUROPÄISCHE PATENTSCHRIFT

(11) **EP 3 081 368 B1**
(45) Veröffentlichungstag und Bekanntmachung des Hinweises auf die Patenterteilung: **21.04.2021**
(21) Anmeldenummer: 16165284.7
(22) Anmeldetag: 14.04.2016
(51) Int. Cl.: B29C 70/50, C08J 5/24, B29B 15/12, C08J 5/04

(54) **FASER-KUNSTSTOFF-VERBUNDHALBZEUG UND VERFAHREN ZUR HERSTELLUNG**
PLASTIC COMPOSITE FIBER SEMI-FINISHED PRODUCT AND METHOD FOR PREPARATION
SEMI-PRODUIT COMPOSITE EN PLASTIQUE/FIBRES ET PROCEDE DE PRODUCTION

(30) Priorität: 14.04.2015 DE 102015206637
(43) Veröffentlichungstag der Anmeldung: 19.10.2016
(73) Patentinhaber: Leichtbau-Zentrum Sachsen GmbH, 01307 Dresden (DE); Czulak, Andrzej, 01277 Dresden (DE); Gude, Maik, 01309 Dresden (DE)
(72) Erfinder: Czulak, Andrzej, Dr., 01277 Dresden (DE); Gude, Maik, Prof. Dr., 01328 Dresden (DE); Kretschmer, Markus, 01099 Dresden (DE); Lepper, Martin, Dr., 01279 Dresden (DE)
(74) Vertreter: Kailuweit & Uhlemann Patentanwälte Partnerschaft mbB

(56) Entgegenhaltungen:
- EP-A1- 2 851 182
- US-A1- 2013 303 042

## Beschreibung

Gegenstand der vorliegenden Erfindung ist ein Verfahren, ein Faser-Kunststoff-Verbundhalbzeug (Verbundhalbzeug) mit einem Faserverstärkungsmaterial, das mit einem Einkomponenten-Kunststoff-System versetzt ist, herzustellen, wobei das Verbundhalbzeug unter Normalbedingungen gelagert und wie ein thermoplastisches System umgeformt werden kann, jedoch nach dem Aushärten duroplastische Eigenschaften aufweist. Weiterhin ist das so erzeugte Faser-Kunststoff-Verbundhalbzeug (Verbundhalbzeug) Gegenstand der Erfindung.

Die erfindungsgemäßen Verbundhalbzeuge sind Halbzeuge zur Verarbeitung in Presswerkzeugen zu diversen räumlichen Bauteilen, die in verschiedenen Industriezweigen, wie beispielsweise beim Flugzeugbau, Fahrzeugbau, Anwendung finden.

Die hier in Rede stehenden Verbundhalbzeuge z. B. SMC (sheet molding compounds) sind in der Regel mit wirr bzw. unregelmäßig angeordneten Verstärkungsfasern versehen. Im Pressvorgang können diese Halbzeuge fließen und füllen in Gegensatz zu endlosfaserverstärkten Prepregs (auf Basis von Gelegen bzw. Geweben) die im Werkzeug definierten Geometrien aus. Vorteile gegenüber den endlosfaserverstärkten Prepregs ist, dass auch komplexe Bauteilgeometrien (wie Rippen) abgeformt werden können. Zudem genügt bei der Pressenbestückung im Gegensatz zu den endlosfaserverstärkten Prepregs aufgrund der Fließfähigkeit des Verbundhalbzeugs ein relativ grober Zuschnitt (geringerer Prozessaufwand). Prinzipiell können die Verbundhalbzeuge auch als Prepregs angesehen werden, entsprechen jedoch nicht den "klassischen" Prepregs. Die Kombinierbarkeit von endlosfaserverstärkten Prepregs mit den erfindungsgemäßen Verbundhalbzeugen (z.B. glatte Bauteilvorderseite mit Endlosfaser-Prepreg, verrippte Rückseite aus Verbundhalbzeugen) in einem Pressprozess ist bei Matrixgleichheit besonders vorteilhaft.

Herkömmliche duroplastische Prepregs bestehen aus Endlosfasern und einer ungehärteten duroplastischen Kunststoffmatrix und finden vorrangig im Leichtbau Anwendung. Die Endlosfasern bilden eine Bewehrungsschicht und werden in Form von Geweben, Gelegen oder unidirektional angeordneten Fasern in das Prepreg eingebracht. Vorzugsweise werden auch Wirrfasern, vorzugsweise in Mattenhalbzeugen, eingesetzt. Es kommen beispielsweise Glas-, Kohlenstoff-, Basalt- oder Aramidfasern zum Einsatz. Durch ihre ausgeprägte plastische Verformbarkeit können die Prepregs tafel- oder bahnenförmig (auf Rollen) gelagert und ausgeliefert werden. Um eine vorzeitige Reaktion des Harzes mit dem Härter zu verhindern, müssen die Prepregs nachteilig gekühlt gelagert werden. Darüber hinaus müssen die einzelnen Halbzeugschichten durch Trennfolien getrennt werden. Nur so kann eine Lagerung über längere Zeiträume ermöglicht werden. Bereits bei Raumtemperatur kommt es nachteilig zur vorzeitigen Aushärtung der Prepregs, wodurch eine Formgebung erschwert oder unmöglich wird.

Erfindungsgemäß bezeichnen 1K-Systeme (Einkomponenten-Systeme) Zusammensetzungen, die alle für eine Härtungsreaktion relevanten Bestandteile in nur einer Komponente enthalten. Dies kann auch als Kompositum bezeichnet werden. Bei den Bestandteilen handelt es sich um ein Monomer und einen latenten Härter. Unter Monomer sind reaktive Verbindungen zu verstehen, die mit dem latenten Härter unter bestimmten Bedingungen, wie beispielsweise erhöhter Temperatur, eine chemische Reaktion, auch Härtungsreaktion genannt, eingehen. Dabei entsteht ein vernetztes Polymer.

Vorteilhaft entfällt bei 1K-Systemen ein aufwändiges, eventuell mit Fehlern behaftetes Mischen einzelner Bestandteile, um eine Härtungsreaktion auszulösen.

Epoxidharz ist das Monomer im 1K-System, welches oligomere Verbindungen mit Epoxidgruppen umfasst. Oligomere sind Verbindungen, die aus mehreren strukturell gleichen oder ähnlichen Bauteilen aufgebaut sind. Ausgehärtete Epoxidharze bilden vernetzte Polymere, sogenannte duroplastische Kunststoffe. Vorteilhaft besitzen duroplatische Kunststoffe eine hohe Festigkeit und chemische Beständigkeit, eine geringe Feuchtigkeitsempfindlichkeit sowie eine geringe Wasserdampfdurchlässigkeit.

Vorteilhaft wird so ein bei Raumtemperatur festes 1K-System geschaffen, dass in Pulverform sehr gut zu verarbeiten ist. Die Schmelztemperatur liegt dabei unter der Vernetzungstemperatur.

Bevorzugt ist das Epoxidharz auf Basis von Bisphenol A, besonders bevorzugt als Reaktionsprodukte der Reaktion von Bisphenol A mit Epichlorhydrin hergestellt. Bei der Reaktion von Bisphenol A mit Epichlorhydrin können, je nach molarem Verhältnis der beiden Reaktionspartner, Bisphenol-A-bisglycidylether (auch BADGE oder DGEBA genannt) oder/und oligomere Epoxidharze entstehen. Die oligomeren Epoxidharze mit mehr als zwei Bisphenol A-Gruppen im Molekül sind bei Raumtemperatur Feststoffe. Bevorzugt liegt der Feststoff partikulär vor. Partikulär bezeichnet erfindungsgemäß Teilchengrößen ≤ 130 µm. Bevorzugt weist das handelsübliche Epoxidharz einen Epoxidwert von 0,05 bis 0,56 mol/100 g, besonders bevorzugt von 0,05 bis 0,28 mol/100 g auf. Der Epoxidwert gibt an, wie viele Epoxidgruppen in 100 g Epoxidharz enthalten sind.

Bevorzugt weist das Epoxidharz eine Schmelztemperatur im Bereich von 50 bis 130 °C auf. Schmelztemperatur beschreibt erfindungsgemäß die Temperatur bei der das bei Raumtemperatur feste Epoxidharz verflüssigt wird.

Bevorzugt enthält das 1K-System 86 bis 99 Gew-% des Epoxidharzes, gemessen an der gesamten Masse des 1K-Systems, weiterhin bevorzugt 90 % bis 98 % und besonders bevorzugt 92 % bis 98 %

Bevorzugt dienen als latente Härter modifizierten Amine, besonders bevorzugt sekundäre Amine wie bspw. Imidazol, in einer Menge von 1 bis 15 Gew.-%, gemessen an der gesamten Masse des 1K-Systems weiterhin bevorzugt 2 bis 10 Gew.-% und besonders bevorzugt 2 bis 8 Gew.-%. des 1K-Systems.

Sekundäres Amin bezeichnet ein Amin, welches zweifach substituiert ist. Bevorzugt ist das sekundäre Amin Imidazol oder ein Imidazol-Derivat. Erfindungsgemäß bezeichnet Imidazol-Derivat alle Verbindungen, die die gleiche Grundstruktur wie das Imidazol haben und deren Struktur sich somit aus der Imidazolgrundstruktur ableiten lässt.

Bevorzugt weist das 1K-System eine Vernetzungstemperatur von über 100 °C auf. Der Abstand zwischen Schmelztemperatur und Vernetzungstemperatur beträgt jedoch stets bevorzugt 35 K.

Die Vernetzungstemperatur ist die Temperatur, bei der die Härtungsreaktion zwischen Monomer und latentem Härter ausgelöst wird.

Die US 5,125,085 beschreibt einen Prozess, um Harzmatten mit Polyimiden als Matrixwerkstoff herzustellen. Dabei werden die Monomere in Alkoholen verschiedener Kettenlängen gelöst und der Verstärkungsfaserwerkstoff mit diesen getränkt. Anschließend wird das Gemisch aus Fasern und Monomeren zwischen zwei Trägerfolien eingebracht. In einem nachfolgenden Erwärmungsprozess werden die Alkohole mit wenigen Kohlenstoffatomen durch Erhitzung ausgetrieben. Auf diese Weise bleibt die entstandene Matte flexibel, wobei die Viskosität des ungehärteten Gemisches jedoch groß genug ist, um ein Herausfließen der Monomere aus dem Folienzwischenraum zu verhindern. Die Erhitzung des Mattenhalbzeugs führt zum Austritt von Alkoholdämpfen. Diese müssen aufwendig abgesaugt und eine Explosionsgefahr vermieden werden.

Gegenstand der US 6,103,032 sind eine Vorrichtung und ein Verfahren zur Herstellung von Harzmatten. Die Vorrichtung weist einen Anlagenteil zur Herstellung eine Faserbahn aus einer wässrigen Dispersion auf. Die Faserbahn wird getrocknet und zwischen zwei Folienbänder appliziert. Das entstehende Band mit der Faserbahn zwischen den beiden Folien wird in eine Vakuumkammer bewegt. Hier wird die obere Folienbahn abgehoben. So kann zwischen den Folien, in der Faserbahn, befindliche Luft entweichen. Gleichzeitig wird Harz auf die Faserbahn gesprüht. Anschließend wird die obere Folienbahn wieder auf der Faserbahn abgelegt. Diese verlässt die Vakuumkammer und wird als Halbzeug auf einer Spindel aufgewickelt. Die Verarbeitung in einer Vakuumkammer ist aufwendig. Problematisch bleibt das nachträgliche Anheben der oberen Folienbahn, dass diese stark beansprucht. Darüber hinaus ist aufgrund des fortlaufenden Charakters des Halbzeugstapels eine Schleusung nicht möglich. Dies vergrößert den Energieaufwand zur Aufrechterhaltung des Vakuums weiter. Das fertig aufgewickelte Halbzeug muss unter Bedingungen gelagert werden, die ein unerwünschtes Aushärten des Matrixwerkstoffes zuverlässig verhindern.

Die EP 2 851 182 A1 beschreibt ein 1K-System bestehend aus einem Epoxidharz und einem sekundären Amin als Härter. Darüber hinaus wird die Verwendung des 1K-Systems zur Herstellung von imprägnierten Halbzeugen offenbart. Dies beinhaltet eine kontinuierliche Verfahrensdurchführung bei der ein Verstärkungsfasergebilde auf einem Förderband ausgelegt und das 1K-Systems aufgebracht wird. Anschließend erfolgt eine Erwärmung auf eine Temperatur über der Erweichungs- jedoch unter der Vernetzungstemperatur. Dieses Verfahren kann in einer Doppelbandpresse durchgeführt werden.

Gegenstand der US 2013/ 0 303 042 A1 (Prio-Anmeldung: DE 10 2010 041 247) ist ein Verfahren zur Herstellung von Prepregs. Die Prepregs bestehen im Wesentlichen aus mindestens einem faserförmigen Träger und mindestens einer reaktiven Polyurethanzusammensetzung als Matrixmaterial. Die Polyurethanzusammensetzungen weisen Mischungen aus einem gegenüber Isocyanaten reaktive funktionelle Gruppen aufweisenden Polymeren als Binder und intern blockierten und/oder mit Blockierungsmitteln blockierten Di- oder Polyisocyanat als Härter in mindestens einem Lösemittel auf, wobei, die Schritte
- Herstellung der reaktiven Polyurethanzusammensetzung in mindestens einem Lösemittel, und
- direkte Imprägnierung des faserförmigen Trägers mit der Lösung,
- Entfernen des Lösemittels
   ausgeführt werden.

Es stellt sich somit die Aufgabe, ein Verfahren anzugeben, dass es ermöglicht, ein gut handhabbares und lagerbares Halbzeug für duroplastische Faserverbundwerkstoffe herzustellen.

Erfindungsgemäß wird die Aufgabe mit einem Verfahren nach Anspruch 1 sowie ein damit hergestelltes Faserverbundhabzeug gemäß Anspruch 5 gelöst. Vorteilhafte Verfahrensweisen sind in den rückbezogenen Unteransprüchen offenbart.

Das erfindungsgemäße Verfahren sieht vor, auf einem Transportband Harz als Matrixmaterial und Verstärkungsfasermaterial aufzubringen und dieses bei optional erhöhter Temperatur zu verpressen. Das Transportband und die Presse weisen vorteilhaft eine Beschichtung auf, die ein Anhaften des Harzes verhindert. Bevorzugt ist das Transportband bereits Bestandteil einer Bandpresse. Die Temperatur wird zum Pressen so erhöht, dass das Harz schmilzt, jedoch die Vernetzungsreaktion nicht einsetzt. Beim Erweichen dringt das Harz in die Zwischenräume zwischen den Fasern des Verstärkungsfasermaterials ein. Nach dem Verpressen und ggf. aktivem oder passivem Abkühlen des Harz-Verstärkungsfasergemisches auf Umgebungstemperatur, wenigstens jedoch unterhalb der Erweichungstemperatur, liegt ein handhabbares Halbzeug vor, das vorkonfektioniert (geschnitten) z.B. in Tafelform oder auf Rollen zum Transport aufgewickelt werden kann. Eine weitere bevorzugte Form des handhabbaren Halbzeugs liegt als formlose, in kleinere Abschnitte vorgeschnittene Masse (Bulk Moulding Compound - BMC) in Transportverpackungen (bspw. Säcken) vor. Dabei wird das Halbzeug direkt nach dem Fertigungsprozess oder zu einem späteren Zeitpunkt zerkleinert (z.B. in Flakes oder Plattenabschnitte) und als Schüttgut abgefüllt. Das Material in Form von BMC eignet sich sehr gut für eine Verarbeitung im Duroplast-Spritzgießverfahren oder Heißpressverfahren. Besonders geeignet zur Herstellung von BMC-Formmassen sind Materialien auf Basis von Kurz-, Mittel- und Langfasern. Eine zusätzliche Kühlung des Halbzeugs unterhalb der Raumtemperatur (20°C) ist vorteilhaft nicht notwendig. Als Harz (Matrixmaterial) kommt ein oben beschriebenes Einkomponenten-System (1 K-System) zum Einsatz, das einen deutlichen Abstand zwischen Schmelztemperatur und Vernetzungstemperatur aufweist. Das Harz kann durch Regelung der Temperatur in seiner Konsistenz zwischen körnig und gelartig (pastös) bzw. bis hin zu flüssig je nach Bedarf eingestellt werden. Das Verstärkungsfasermaterial besteht bevorzugt aus Glasfasern, Kohlenstofffasern, Aramid, Naturfasern oder Basaltfasern. Prinzipiell sind alle Faserarten möglich die gegenüber dem Matrixmaterial (Harz) beständig sind. Erfindungsgemäß sind die Fasern als Kurzfasern ausgeführt.

In einer ersten nicht erfindungsgemäßen Ausführungsform wird eine Harzschicht aus pulverförmigen Harz auf ein Transportband aufgestreut. Auf diese erste Harzschicht wird Verstärkungsfasermaterial aufgebracht und darüber eine zweite Harzschicht aufgestreut. Anschließend wird dieser Lagenstapel gepresst und so vorkonsolidiert. Zur Erweichung des pulverförmigen Harzes findet eine unterstützende Erwärmung statt, die die Viskosität des Harzes herabsetzt, das so besser in die Zwischenräume der Fasern des Verstärkungsfasermaterials eindringt. Die Schmelztemperatur wird erreicht, jedoch nicht die Temperatur, bei der die Vernetzung des Harzes einsetzt. Optional kann das Halbzeug nach dem Austritt aus dem Pressvorgang unterstützend gekühlt werden, damit es schneller Umgebungstemperatur (ca. 20°C) erreicht, zumindest aber die Erweichungstemperatur unterschreitet. Der vorkonsolidierte Lagenstapel kann dann konfektioniert werden. Dabei wird der Lagenstapel bevorzugt aufgewickelt oder abgelängt oder zu einer formlosen Masse (Bulk-Material) zerkleinert (geshreddert).

In einer zweiten nicht erfindungsgemäßen Ausführungsform ist die erste Harzschicht pastös und wird auf ein Transportband aufgebracht. Der pastöse Zustand des Harzes wird durch Erwärmung, vorzugsweise in den Dosierbehältern erreicht. In dieser bevorzugten Ausführungsweise werden Endlosfasern unmittelbar vor dem Einstreuen auf die erste Faserlage auf die gewünschte Länge zugeschnitten und auf die erste Harzschicht aufgebracht (aufrieseln). Optional kann darüber eine zweite Harzschicht aufgebracht werden, dann vorzugsweise ebenfalls aus einer pastösen Harzschicht. Pressen, optionales weiteres Erwärmen bzw. Abkühlen und ggf. Konfektionierung erfolgen dann analog zu den vorbeschriebenen Vorgehensweisen.

In einer erfindungsgemäßen Ausführungsform liegt das Harz pulverförmig vor und wird mit bereits vorgeschnittenen Kurzfasern vermischt. Anschließend wird diese Mischung auf ein Transportband aufgebracht und einer Erwärmung bis in den pastösen Zustand und dem Pressvorgang zugeführt. Anschließend erfolgen optional die aktive Abkühlung und die Konfektionierung bzw. Aufwicklung des Halbzeugs. Optional können Harzpulver und Kurzfasern auch während des Aufrieselns auf das Transportband vermischt werden.

In einer weiteren bevorzugten Ausführungsform werden auf die zweite Harzschicht eine weitere Faserlage und darüber eine weitere Harzschicht (dritte Harzschicht) aufgebracht. Prinzipiell können weitere Faserlagen und Harzschichten folgen, bevor der Lagenstapel gepresst wird. Die Materialarten und -dicken, die Faserlängen und Ausrichtungen der Faserlagen können zwischen den Faserlagen variieren. Es sind jedoch auch gleichartige Faserlagen möglich.

In noch einer weiteren nicht erfindungsgemäßen Ausführungsform liegt das Harz als Folie vor und wird so auf einem Transportband abgelegt. Darauf wird eine Schicht von Verstärkungsfasern aufgebracht. Diese können wieder als Gewebe, Filze oder als Fasereinstreu oder einer anderen Form vorliegen. Darüber wird optional eine zweite Folie aus Harz aufgebracht. Anschließend wird der Lagenstapel erwärmt (bis oberhalb der Schmelztemperatur, jedoch unterhalb der Vernetzungstemperatur) und wieder dem Pressvorgang zugeführt. Nachfolgend kann, wie in den anderen Verfahrensvarianten, optional gekühlt, konfektioniert bzw. das Halbzeug in eine sonstig für eine weitere Verarbeitung vorgesehene Form gebracht werden (Rollen, Gebinde, gefalteter Stapel, formlose Masse etc.).

Erfindungsgemäß ist an diesem Verfahren, dass die Lagen der Halbzeuge nicht durch Folien voneinander getrennt werden müssen, um ein Verkleben bei Transport und Lagerung zu verhindern, da das Harz bei den üblichen Umgebungstemperaturen (ca. 20°C bis zu 40°C) in nichtklebender, nichterweichter Form, vorliegt. Darüber hinaus ist es nicht notwendig, die Trennfolien vor der Weiterverarbeitung aufwändig zu entfernen und zu entsorgen.

Besonders vorteilhaft ist auch bei der Verarbeitung kein Einsatz von Folien notwendig, die die eingesetzten Werkzeuge vom Harz trennen müssten. Es genügt eine haftvermeidende Beschichtung (bspw. mit PTFE bzw. nicht haftenden Bandmaterialien (bspw. Silikone)) der Werkzeuge. (Dies gilt für die Werkzeuge für die Verbundhalbzeugherstellung). Die Endverarbeitung der Verbundhalbzeuge erfolgt vorzugsweise in Formwerkzeugen, die üblicher Weise mit einem Trennmittel behandelt werden.

Die Verarbeitung (Verbundhalbzeugherstellung) erfolgt bevorzugt in einer Bandpresse, wobei zwei gegenläufig rotierende Bänder das Harz/Verstärkungsfasermaterial einschließen und mit Druck und optional Temperatur beaufschlagen. Auch die Kühlung erfolgt bevorzugt innerhalb der Bandpresse bzw. unmittelbar nach dem Pressvorgang.

### Figuren

Die Figuren Fig. 1 bis Fig. 4 zeigen verschiedene bevorzugte Ausführungsformen des erfindungsgemäßen Verfahrens.
In **Fig. 1** und **Fig. 2** erfolgt das Aufbringen des Verstärkungsfasermaterials zwischen zwei Schichten aus pastösem Harz. In Fig. 1 wird das Halbzeug auf eine Vorratsrolle aufgewickelt, während es in Fig. 2 für die weitere Verwendung vorgeschnitten wird.
In **Fig. 3** und **Fig. 4** wird das Verstärkungsfasermaterial als Kurzfaserstrom während des Aufrieselns auf das Band der Bandpresse mit dem pulverförmig vorliegenden Harz gemischt. In Fig. 3 wird das Halbzeug auf eine Vorratsrolle aufgewickelt, während es in Fig. 4 für die weitere Verwendung vorgeschnitten wird.

### Ausführungsbeispiele

Die nachfolgend aufgeführten Ausführungsbeispiele erläutern bevorzugte Verfahrensweisen zur Ausführung des erfindungsgemäßen Verfahrens, ohne jedoch die Erfindung auf diese Verfahrensweisen zu beschränken.

### Ausführungsbeispiel 1 (nicht erfindungsgemäß)

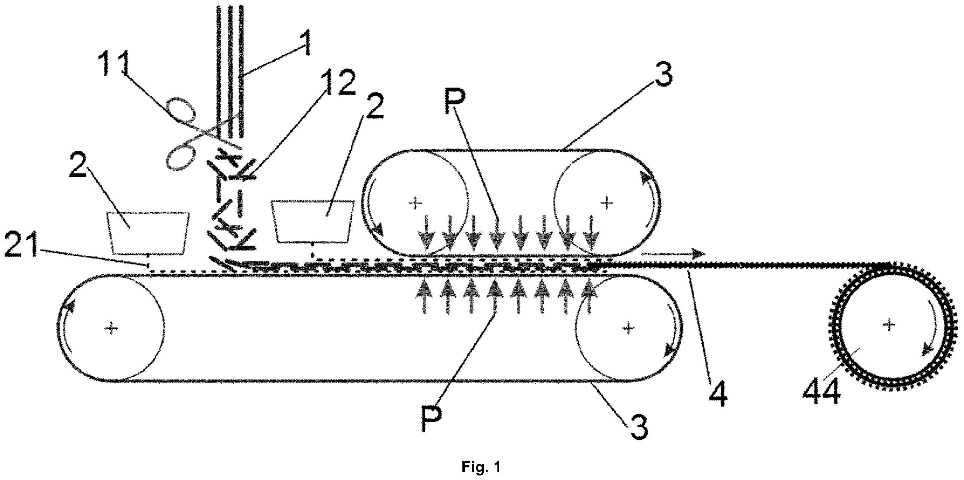

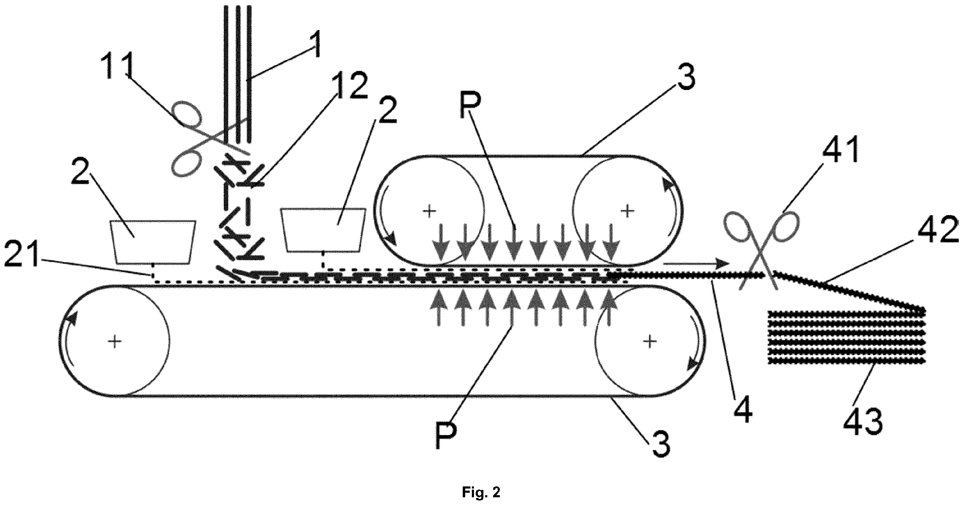

Aus einem Vorratsbehälter 2, in dem das Harzsystem pulverförmig vorliegt, gelangt ein erster Harzstrom 21 auf das Transportband einer Bandpresse 3. Dieser erste Harzstrom 21 ist über die gesamte Breite des herzustellenden Halbzeugs kontinuierlich auf dem Transportband verteilt. Der Harzstrom ist erwärmt, damit das Harzystem in einen pastösen Zustand übergeht. Die gleichmäßige Verteilung kann beispielsweise mittels eines Rakels oder einer Walze geschehen. Bei dem Harz handelt es sich um ein pulverförmiges Harzsystem (z. B. A.S.SET-4,4'isopropylidenediphenol mit 1-chloro-2,3-epoxypropane - Harzsystem) das mittels einer Temperaturerhöhung nach dem Austreten aus den Vorratsbehälter auf 65 °C pastös eingestellt wird. Ein kontinuierlich zugeführter Roving 1 aus Kohlenstofffasern bestehend z.B. aus 50000 Einzelfilamenten wird durch die Schneidvorrichtung 11 in Langfaserfasern einer Länge von ca. 50 mm zerkleinert. Diese Langfasern werden als Verstärkungsfaserschicht 12 mit einem Flächengewicht von ca. 1000 g/m² auf den ersten Harzstrom aufgerieselt. Aus einem weiteren Vorratsbehälter 2 (ebenfalls erwärmt) wird danach ein zweiter Harzstrom auf die Verstärkungsfaserschicht 12 aufgebracht. Während dieser Vorgänge bewegt sich das Transportband vorwärts und die Harz/Verstärkungsfasern/Harz-Schichtung gelangt in die Bandpresse 3. Hier werden die Schichten unter einem Druck P von 5 bar zusammengepresst. Das Harz umschließt nunmehr die Verstärkungsfasern vollständig. Während des Pressvorganges, nach dem Zusammenbringen von Matrix und Verstärkungsfasern und dem ersten Verpressen der Komponenten, kühlt das Halbzeug unter die Erweichungstemperatur des Harzes ab. Nach dem Pressvorgang verlässt ein kontinuierliches Band des Halbzeugs 4 die Bandpresse 3. In der Verfahrensvariante nach Fig. 1 wird das kontinuierliche Band des Halbzeugs 4 auf einer Vorratstrommel 44 aufgewickelt und steht dann für die weitere Transport-, Lagerung- und Verarbeitungsvorgänge zur Verfügung. In der Verfahrensvariante nach Fig. 2 wird das kontinuierliche Band des Halbzeugs 4 mittels der Vorrichtung 41 abgelängt und steht als Stapel 43 von Halbzeugen 42 zur Verfügung. Verbundhalbzeuge auf Basis von Kohlenstoffasern mit einer Faserlänge von 50 mm und wirrerer Orientierung bieten im gehärteten Zustand sehr gute mechanische Eigenschaften und lassen sich hervorragend zu Bauteilen verarbeiten. Die Weiterverarbeitung der hergestellten Halbzeuge erfolgt in einem Pressvorgang in metallischen Formwerkzeugen z.B. auf hydraulischen Pressen nach dem Stand der Technik.

### Ausführungsbeispiel 2 (erfindungsgemäß)

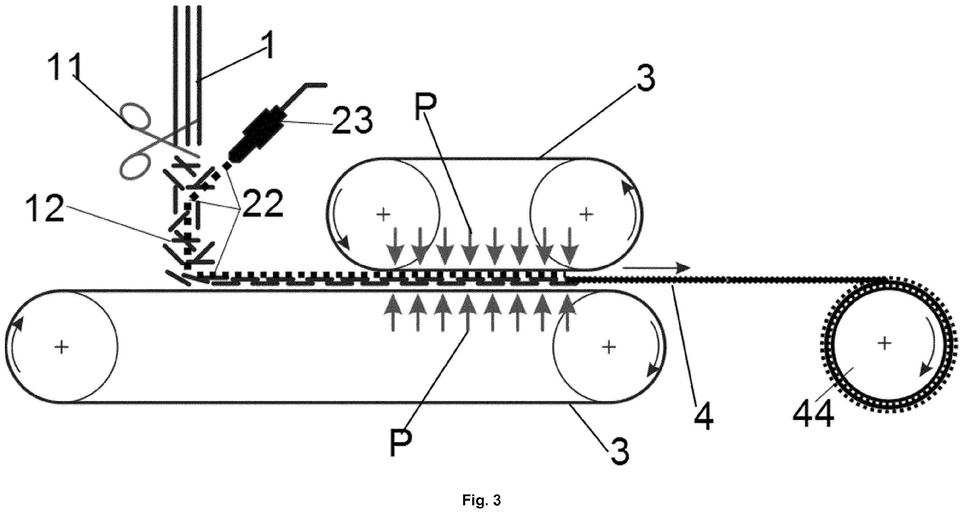

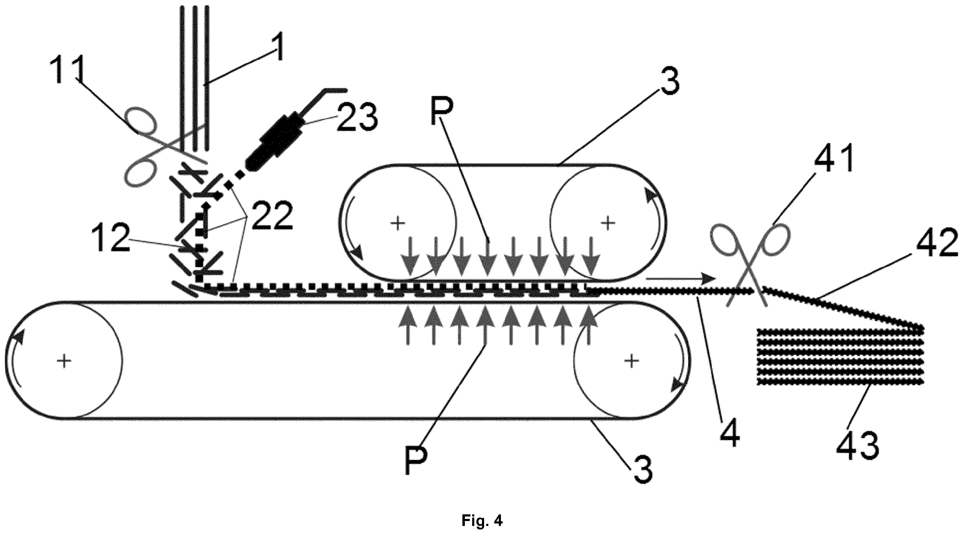

Erfindungsgemäß (Fig. 3 und Fig. 4) werden die wie oben beschrieben zugeschnittenen Kurzfasern während des Aufrieselns auf das Transportband mit pulverförmigem Harz 22 vermischt. Bei dem Harz 22 handelt es sich um ein pulverförmiges Harzsystem (z. B. A.S.SET- 4,4'isopropylidenediphenol mit 1-chloro-2,3-epoxypropane - Harzsystem). Das Harz ist hier noch nicht erwärmt und liegt daher pulverförmig vor. Das Harz 22 wird mittels des Dosierers 23 als feinkörniger Strom dem herabrieslnden Kurzfaserstrom 12 beigemischt. Auf das Transportband gelangt dann ein bereits durchgemischtes Kurzfaser/Harz-Gemisch 12, 22 der angestrebten Halbzeugbreite. Dieses tritt anschließend in die Bandpresse 3 ein. Hier erfolgt eine Temperaturerhöhung auf 65 °C. Das pulverförmige Harz 22 schmilzt auf, ohne dass jedoch eine Vernetzungsreaktion einsetzt. Das aufgeschmolzene Harz 22 und die Kunstfasern 12 werden unter einem Druck P von ca. 5 bar zusammengepresst. Nach dem Austritt aus der Bandpresse 3 kühlt das Halbzeug 4 und damit das Harz auf eine Temperatur unterhalb der Erweichungstemperatur ab und kann wie in Ausführungsbeispiel 1 beschrieben aufgewickelt oder abgelängt werden.

### Bezugszeichen

- 1: Faserstrang (Roving)
- 11: Schneidvorrichtung zur Zerkleinerung der endlosen Faserstränge (Kurzfaserherstellung)
- 12: Kurzfasern
- 2: Harz-Vorratsbehälter
- 21: Harzstrom zur Schaffung der ersten Harzschicht
- 22: pulverförmiges Harz
- 23: Dosiervorrichtung für pulverförmiges Harz
- 24: Harzstrom zur Schaffung der zweiten Harzschicht
- 3: Bandpresse
- 4: Halbzeug nach dem Pressen
- 41: Schneidvorrichtung für Halbzeug
- 42: abgelängtes Halbzeug
- 43: Stapel abgelängten Halbzeugs
- 44: Halbzeugaufwicklung/Vorratstrommel
- P: Druck

## Patentansprüche

1. Verfahren zur kontinuierlichen Herstellung von Faserverbundhalbzeug bestehend aus einem Verstärkungsfasermaterial (12) und einem Matrixmaterial (21,22), das einen Abstand zwischen Schmelztemperatur und Vernetzungstemperatur aufweist und das ein Einkomponenten-Epoxidharz ist, wobei
- Schmelztemperatur die Temperatur beschreibt, bei der das Epoxidharz verflüssigt wird,
- Vernetzungstemperatur die Temperatur ist, bei der die Härtungsreaktion zwischen Monomer und latentem Härter ausgelöst wird,
- die Schmelztemperatur dabei unter der Vernetzungstemperatur liegt, und
- das Matrixmaterial (21, 22) im unvernetzten Zustand thermoplastische und im vernetzten Zustand duroplastische Eigenschaften hat,
aufweisend mindestens die folgenden Schritte:
a. Aufbringen von Verstärkungsfasermaterial (12) und unvernetztem Matrixmaterial (21, 22) auf ein Transportband,
b. Pressen von Verstärkungsfasermaterial (12) und unvernetztem Matrixmaterial (21, 22) zu dem Faserverbundhalbzeug (4),
**gekennzeichnet dadurch, dass** das Aufbringen von Verstärkungsfasermaterial (12) und unvernetztem Matrixmaterial (21, 22) als Lage einer Mischung von vorgeschnittenen Kurzfasern (12) und pulverförmigem, unvernetztem Matrixmaterial (21, 22) erfolgt und das Verstärkungsfasermaterial (12) und das Matrixmaterial (21, 22) auf dem Transportband, während des Pressvorganges oder als Halbzeug (4) nicht durch Folien gegen das Material des Transportbandes, der Bandpresse (3) oder gegen andere Halbzeuglagen (43) abgegrenzt werden und dass das Matrixmaterial (21, 22) während des Pressens aufgrund einer Erwärmung in geschmolzenem Zustand vorliegt, jedoch dabei nicht vernetzt.

2. Verfahren nach Anspruch 1, **dadurch gekennzeichnet, dass** nach dem Pressen eine Abkühlung des Halbzeugs (4) auf Umgebungstemperatur, wenigstens jedoch unterhalb der Schmelztemperatur des Matrixmaterials (21, 22) erfolgt.

3. Verfahren nach einem der vorhergehenden Ansprüche, **dadurch gekennzeichnet, dass** das Verstärkungsfasermaterial (12) aus Glasfasern, Kohlenstofffasern, Aramid-, Natur- oder Basaltfasern besteht.

4. Verfahren nach einem der vorhergehenden Ansprüche, **dadurch gekennzeichnet, dass** das Faserverbundhalbzeug nach der Abkühlung unter die Schmelztemperatur aufgewickelt, auf einen Stapel abgelängt oder zu Bulk-Material zerkleinert wird.

5. Faserverbundhalbzeug hergestellt mit einem der Verfahren nach Ansprüche 1 bis 4, wobei die Lagen des Halbzeugs nicht durch Folien voneinander getrennt werden.

6. Faserverbundhalbzeug nach Anspruch 5, **dadurch gekennzeichnet, dass** das Matrixmaterial ein Epoxidharz auf Basis von Bisphenol A enthält.

7. Faserverbundhalbzeug nach Anspruch 5 oder 6, **dadurch gekennzeichnet, dass** das Verstärkungsfasermaterial (12) aus Glasfasern, Kohlenstofffasern, Aramid-, Natur- oder Basaltfasern besteht.

8. Faserverbundhalbzeug nach einem der Ansprüche 5 bis 7, **dadurch gekennzeichnet, dass** das Faserverbundhalbzeug als gewickelter Ballen, Stapel oder als Bulk-Material vorliegt.

## Claims

1. Method for continuously producing a fibre composite semi-finished product consisting of a reinforcing fibre material (12) and a matrix material (21, 22) which has an interval between the melting temperature and the crosslinking temperature and which is a single-component epoxy resin, in which method
- the melting temperature is the temperature at which the epoxy resin is liquefied,
- the crosslinking temperature is the temperature at which the curing reaction between a monomer and a latent curing agent is triggered,
- the melting temperature in this case is below the crosslinking temperature, and
- the matrix material (21, 22) has thermoplastic properties in the uncrosslinked state and thermoset properties in the crosslinked state,
comprising at least the following steps:
a. applying reinforcing fibre material (12) and uncrosslinked matrix material (21, 22) to a conveyor belt,
b. pressing reinforcing fibre material (12) and uncrosslinked matrix material (21, 22) to form the fibre composite semi-finished product (4),
**characterised in that** the reinforcing fibre material (12) and uncrosslinked matrix material (21, 22) are applied as a layer of a mixture of pre-cut short fibres (12) and powdered, uncrosslinked matrix material (21, 22), and the reinforcing fibre material (12) and the matrix material (21, 22) on the conveyor belt, during the pressing process or as a semi-finished product (4), are not delimited from the material of the conveyor belt of the belt press (3) or from other semi-finished product layers (43) by films, and **in that** the matrix material (21, 22) is in the molten state during the pressing, due to heating, but is not crosslinked.

2. Method according to claim 1, **characterised in that**, after the pressing, the semi-finished product (4) is cooled to the ambient temperature, but at least below the melting temperature of the matrix material (21, 22).

3. Method according to either of the preceding claims, **characterised in that** the reinforcing fibre material (12) consists of glass fibres, carbon fibres, aramid fibres, natural fibres or basalt fibres.

4. Method according to any of the preceding claims, **characterised in that**, after cooling below the melting temperature, the fibre composite semi-finished product is wound up, cut to length to form a stack or comminuted to form bulk material.

5. Fibre composite semi-finished product produced using one of the methods according to claims 1 to 4, wherein the layers of the semi-finished product are not separated from one another by films.

6. Fibre composite semi-finished product according to claim 5, **characterised in that** the matrix material contains an epoxy resin based on bisphenol A.

7. Fibre composite semi-finished product according to either claim 5 or claim 6, **characterised in that** the reinforcing fibre material (12) consists of glass fibres, carbon fibres, aramid fibres, natural fibres or basalt fibres.

8. Fibre composite semi-finished product according to any of claims 5 to 7, **characterised in that** the fibre composite semi-finished product is a wound bale, a stack or bulk material.

## Revendications

1. Procédé de fabrication en continu d'un semi-produit composite de fibres, constitué d'un matériau de fibres de renforcement (12) et d'un matériau de matrice (21, 22) qui présente un écart entre la température de fusion et la température de réticulation et qui est une résine époxy monocomposant,
- la température de fusion décrivant la température à laquelle la résine époxy est liquéfiée,
- la température de réticulation étant la température à laquelle la réaction de durcissement entre le monomère et le durcisseur latent est provoquée,
- la température de fusion étant inférieure à la température de réticulation, et
- le matériau de matrice (21, 22) présentant des propriétés thermoplastiques à l'état non réticulé et des propriétés thermodurcissables à l'état réticulé,
présentant au moins les étapes suivantes :
a. application d'un matériau de fibres de renforcement (12) et d'un matériau de matrice non réticulé (21, 22) sur une bande transporteuse,
b. pressage du matériau de fibres de renforcement (12) et du matériau de matrice non réticulé (21, 22) pour former le semi-produit composite de fibres (4),
**caractérisé en ce que** le matériau de fibres de renforcement (12) et le matériau de matrice non réticulé (21, 22) sont appliqués sous la forme d'une couche d'un mélange de fibres courtes prédécoupées (12) et d'un matériau de matrice pulvérulent non réticulé (21, 22), et le matériau de fibres de renforcement (12) et le matériau de matrice (21, 22) sur la bande transporteuse, pendant le processus de pressage ou en tant que semi-produit (4), ne sont pas séparés du matériau de la bande transporteuse, de la presse à bande (3) ou d'autres couches de semi-produit (43) par des feuilles, et **en ce que**, pendant le pressage, le matériau de matrice (21, 22) est présent à l'état fondu à cause d'un réchauffement, mais n'est pas réticulé.

2. Procédé selon la revendication 1, **caractérisé en ce qu'**après le pressage, le semi-produit (4) est refroidi à température ambiante, mais au moins inférieure à la température de fusion du matériau de matrice (21, 22).

3. Procédé selon l'une des revendications précédentes, **caractérisé en ce que** le matériau de fibres de renforcement (12) est constitué de fibres de verre, de fibres de carbone, de fibres d'aramide, de fibres naturelles ou de fibres de basalte.

4. Procédé selon l'une des revendications précédentes, **caractérisé en ce qu'**après le refroidissement au-dessous de la température de fusion, le semi-produit composite de fibres est enroulé, coupé à longueur pour former une pile ou broyé sous la forme d'un matériau en vrac.

5. Semi-produit composite de fibres fabriqué au moyen de l'un des procédés selon les revendications 1 à 4, les couches du semi-produit n'étant pas séparées les unes des autres par des feuilles.

6. Semi-produit composite de fibres selon la revendication 5, **caractérisé en ce que** le matériau de matrice contient une résine époxy à base de bisphénol A.

7. Semi-produit composite de fibres selon la revendication 5 ou 6, **caractérisé en ce que** le matériau de fibres de renforcement (12) est constitué de fibres de verre, de fibres de carbone, de fibres d'aramide, de fibres naturelles ou de fibres de basalte.

8. Semi-produit composite de fibres selon l'une des revendications 5 à 7, **caractérisé en ce que** le semi-produit composite de fibres se présente sous la forme d'une balle enroulée, d'une pile ou d'un matériau en vrac.
